# EUROPEAN PATENT SPECIFICATION

(11) **EP 3 603 894 B1**
(45) Date of publication and mention of the grant of the patent: **15.09.2021**
(21) Application number: 17903771.8
(22) Date of filing: 30.11.2017
(51) Int. Cl.: B25F 5/00, H02K 9/06

(54) **POWER TOOL**
ELEKTROWERKZEUG
OUTIL ÉLECTRIQUE

(30) Priority: 31.03.2017 JP 2017071892
(43) Date of publication of application: 05.02.2020
(73) Proprietor: Panasonic Intellectual Property Management Co., Ltd., Osaka-shi, Osaka 540-6207 (JP)
(72) Inventor: KITAMURA, Kota, Osaka-shi, Osaka 540-6207 (JP); YAMANE, Tsuyoshi, Osaka-shi, Osaka 540-6207 (JP); TAKEYAMA, Atsushi, Osaka-shi, Osaka 540-6207 (JP)
(74) Representative: Müller-Boré & Partner Patentanwälte PartG mbB
(86) International application number: PCT/JP2017/043090
(87) International publication number: WO 2018/179587

(56) References cited:
- EP-A1- 2 689 897
- EP-A1- 2 889 107
- EP-A2- 2 433 758
- EP-A2- 2 561 963
- EP-A2- 2 716 412
- WO-A1-2012/128004
- JP-A- 2007 196 363
- JP-A- 2010 120 121
- JP-A- 2013 035 105
- JP-A- 2014 117 792
- JP-A- 2015 051 482
- JP-A- 2015 223 658
- US-A1- 2013 255 980
- US-A1- 2016 344 170
- US-B1- 6 290 587

## Description

### [TECHNICAL FIELD]

The present disclosure relates to an electric power tool in which a motor is provided in a housing and, more particularly, to an electric power tool in which the motor located in the housing is a built-in motor that does not have a motor case.

### [BACKGROUND ART]

It is common to use a built-in motor in a handheld electric power tool used to bore a hold or to tighten a screw, etc. to reduce the size and weight (e.g., patent literatures 1-3). A built-in motor is configured by assembling the constituting elements of the motor directly in a rib member provided to project from the inner circumferential surface of the housing. A built-in motor does not have a motor case and so contributes to reduction of the size and weight of the electric power tool.

[Patent Literature 1] JP2007-136607
[Patent Literature 2] JP2006-972
[Patent Literature 3] JP2012-71360

Document EP 2,561,963 A2 describes an electric tool including a motor housing and a motor disposed within the motor housing. The motor has a stator fixed in position relative to the motor housing and a rotor rotatable about a motor axis. Cooling air can flow within the motor housing across the motor in a direction substantially parallel to the motor axis. A baffle may be disposed within the motor housing for regulating the flow of cooling air across the motor. At least a part of the baffle may be positioned within a range of a length of the stator with respect to the axial direction of the motor axis.

Document EP 2,433,758 A2 describes a rechargeable electric tool in which a battery pack can be detachably mounted to a mounting part formed lower than an opening, wherein a seal member is held in the housing to seal between the opening and the battery pack. A projection projecting toward the opening side is pro-vided at the seal member and a passing hole that penetrates the projection and the seal member and allows a lead line connecting an electric component to the battery pack to pass therethrough is formed.

### [SUMMARY OF INVENTION]

### [TECHNICAL PROBLEM]

It is known that the heat generated in the stator adversely affects the output characteristics of the motor. For this reason, a cooling mechanism, in which a cooling fan is attached to the shaft fixed to the rotor and introduces air from outside in response to the rotation of the rotor so as to cool the stator, is employed in an electric power tool.

In an electric power tool including a built-in motor, however, the space inside the housing is extensive so that it is not easy to send air in a flow passage as designed. It is therefore hard to say that the motor is cooled efficiently. The stator coil represents a serious heat generating source in the motor. It is therefore preferred to send air in an air gap between the stator core and the rotor to cool the stator coil. The problem is that the air gap is narrow so that an air flow cannot enter the air gap easily.

The disclosure addresses the above-described issue, and a general purpose thereof is to provide an electric power tool including a built-in motor with a structure to cool the stator coil efficiently.

### [SOLUTION TO PROBLEM]

The electric power tool according to an embodiment of the present disclosure is an electric power tool in which a motor located in a housing is a built-in motor that does not have a motor case, the electric power tool including: a first retaining part provided on an inner circumferential surface of the housing to retain an outer circumference of the motor at or near one end of the motor; a second retaining part that retains an outer circumference of a first bearing that supports a first motor shaft extending from the one end of the motor; a third retaining part provided on the inner circumferential surface of the housing to retain the outer circumference of the motor at or near the other end of the motor; and a fourth retaining part that retains an outer circumference of a second bearing that supports a second motor shaft extending from the other end of the motor. A first chamber bounded by the first retaining part, the second retaining part, and the housing includes a first vent communicating with a space outside the housing. A second chamber bounded by the third retaining part, the fourth retaining part, and the housing includes a second vent communicating with a space outside the housing. A cooling fan coupled to the first motor shaft is housed in the first chamber.

### [BRIEF DESCRIPTION OF DRAWINGS]

Fig. 1 is a schematic cross-sectional view of a part of an electric power tool according to an embodiment;
Fig. 2 is an A-A cross-sectional view of the electric power tool shown in Fig. 1; and
Fig. 3 shows a flow passage of air.

### [DESCRIPTION OF EMBODIMENTS]

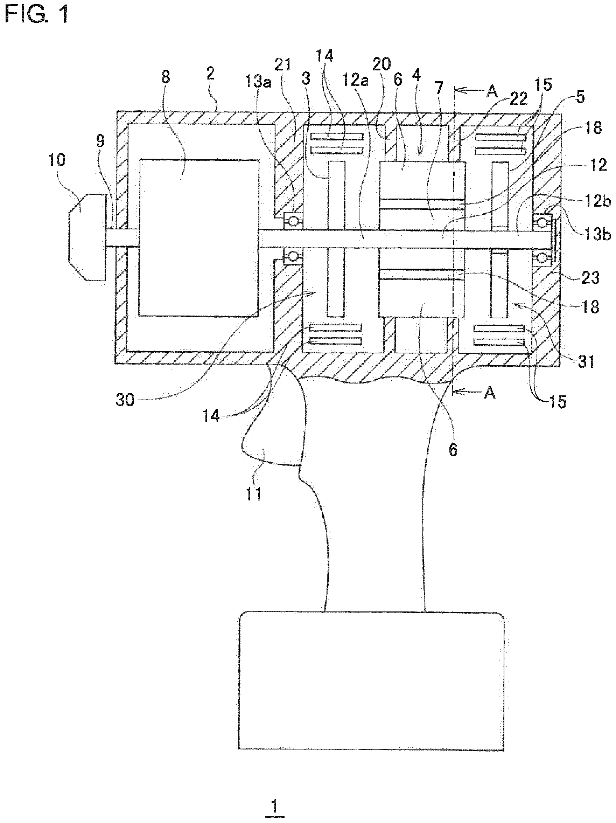

Fig. 1 is a schematic cross-sectional view of a part of an electric power tool according to an embodiment. An electric power tool 1 includes a housing 2, and the housing 2 includes a motor 4 formed by a stator 6, a rotor 7, and a shaft 12. The motor 4 located in the housing 2 is a built-in motor that does not have a motor case. Absence of a motor case of the motor 4 contributes to reduction of the size and weight of the electric power tool 1.

The shaft 12 of the motor 4 is rotated in tandem with the rotor 7, and a cooling fan 3 (centrifugal fan) is fixed to the shaft 12 toward the front of the motor. A sensor substrate 5 is provided toward the back of the motor 4. The sensor substrate 5 is fixed to the stator 6 and carries a plurality of Hall ICs for detecting the rotational position of the rotor 7. Hereinafter, the shaft 12 toward the front of the motor 4 and the shaft 12 toward the back are distinguished from each other by referring to the former as "a first motor shaft 12a" and the latter as "a second motor shaft 12b".

A driving block 8 includes a power transmission mechanism for transmitting the rotation of the first motor shaft 12a to an output shaft 9. The power transmission mechanism may include a planetary gear deceleration mechanism in mesh with a pinion gear fitted to the first motor shaft 12a. A chuck mechanism 10 is coupled to the output shaft 9. A front-end tool such as a drill and a driver is removably attached to the chuck mechanism 10. The grip of the housing 2 is provided with a user operation switch 11 manipulated by the operator. When the operator pulls the user operation switch 11, the motor 4 is rotated, and the output shaft 9 of the driving block 8 drives the front-end tool.

The motor 4 is a brushless motor of an inner rotor type. The rotor 7 including a plurality of permanent magnets is rotated in a space inward of the stator 6. The stator 6 is comprised of a stator core and an insulator that insulates the stator core from the stator coil. The stator core includes an annular yoke part and a plurality of teeth parts that project radially inward from the inner circumferential surface of the yoke part. A coil is wound around the teeth parts via the insulator to form a plurality of stator coils.

The rotor 7 and the stator 6 that constitute the motor 4 are fixed separately and independently to the housing 2. The housing 2 includes a first retaining part 20, a second retaining part 21, a third retaining part 22, and a fourth retaining part 23 to assemble the motor 4 in the housing 2. The housing 2 is comprised of a pair of (left and right) half housing members sandwiching a perpendicular plane that crosses the line of rotational axis at the center of the electric power tool 1. Therefore, the first retaining part 20, the second retaining part 21, the third retaining part 22, and the fourth retaining part 23 are formed by joining the pair of half housing members. The motor 4 is assembled in the housing 2 by building the stator 6 and first and second bearings 13a, 13b for the shaft 12 into one of the housing members, aligning the other housing member with the assembly and joining the pair of housing members by, for example, tightening a screw.

The first retaining part 20 is a plate member provided to project from the inner circumferential surface of the housing 2 to retain one end side of the motor 4, in this case, retain the outer circumference of the motor 4 at or near the front end of the motor 4. The first retaining part 20 is comprised of rib members respectively formed in the pair of half housing members. The pair of rib members sandwich and fix the frond end side of the outer circumference of the stator 6.

The second retaining part 21 is a plate member provided to project from the inner circumferential surface of the housing 2 to retain the outer circumference of first bearing 13a that supports the first motor shaft 12a extending from the one end, and, in this case, the front end of the motor 4. The second retaining part 21 is comprised of rib members respectively formed in the pair of half housing members. The pair of rib members sandwich and fix the outer circumference of the first bearing 13a.

The third retaining part 22 is a plate member provided to project from the inner circumferential surface of the housing 2 to retain the other end side of the motor 4, in this case, retain the outer circumference of the motor 4 at or near the back end of the motor 4. The third retaining part 22 is comprised of rib members respectively formed in the pair of half housing members. The pair of rib members sandwich and fix the back end side of the outer circumference of the stator 6.

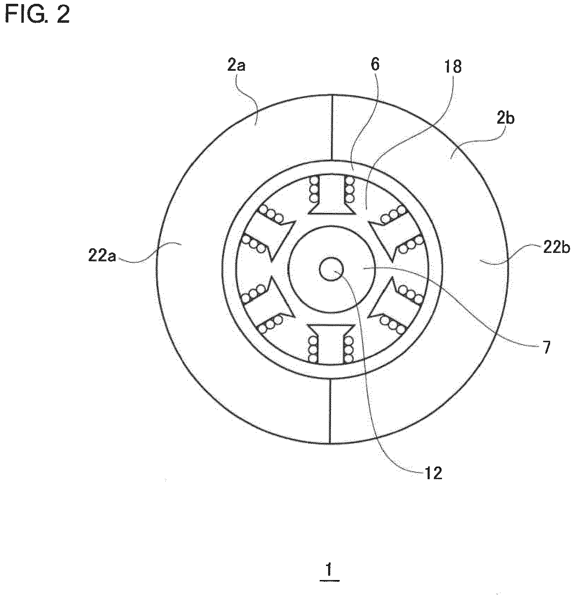

Fig. 2 is an A-A cross sectional view of the electric power tool shown in Fig. 1. Fig. 2 shows the cross section of the third retaining part 22 and the motor 4. The housing 2 is comprised of a pair of half members including a first housing member 2a and a second housing member 2b. The first housing member 2a and the second housing member 2b include a first rib member 22a and a second rib member 22b, respectively, which project from the inner circumferential surfaces of the respective housing members. The first rib member 22a and the second rib member 22b sandwich and fix the outer circumference of the stator 6. The first rib member 22a and the second rib member 22b block the air flow in the housing 2 in the longitudinal direction. The first retaining part 20 and the second retaining part 21 are similarly formed and block the air flow in the housing 2 in the longitudinal direction.

The fourth retaining part 23 is comprised of the back end of the housing 2 and retains the outer circumference of the second bearing 13b that supports the second motor shaft 12b extending from the other end, and, in this case, the back end of the motor 4. Like the second retaining part 21, the fourth retaining part 23 may be comprised of a pair or rib members provided to project from the inner circumferential surface of the housing 2 and sandwich the outer circumference of the second bearing 13b.

An air gap 18 is formed between the stator 6 and the rotor 7 of the motor 4. The embodiment provides a cooling structure for sending air to the air gap 18.

The first retaining part 20, the second retaining part 21, the third retaining part 22, and the fourth retaining part 23 block the air flow in the longitudinal direction of the tool. For this reason, a first chamber 30 bounded by the first retaining part 20, the second retaining part 21, and the housing 2 forms a space sealed in the longitudinal direction, and a second chamber 31 bounded by the third retaining part 22, the fourth retaining part 23, and the housing 2 forms a space sealed in the longitudinal direction. A first vent 14 communicating with a space outside the housing is formed in the housing 2 so as to open in the first chamber 30, and a second vent 15 communicating with a space outside the housing is formed in the housing 2 so as to open in the second chamber 31. The first vent 14 and the second vent 15 may be, for example, a rectangular slit. The second vent 15 may be formed at the housing back end so as to open in the second chamber 31. The cooling fan 3 coupled to the first motor shaft 12a is housed in the first chamber 30.

The supply port and the discharge port of air in the first chamber 30 are the air gap 18 and the first vent 14, respectively, and the supply port and the discharge port of air in the second chamber 31 are the second vent 15 and the air gap 18, respectively. In the electric power tool 1 according to the embodiment, the interior of the housing 2 is segmented into the first chamber 30 and the second chamber 31 in the longitudinal direction of the motor 4 to limit the flow passage of air taken in by the cooling fan 3.

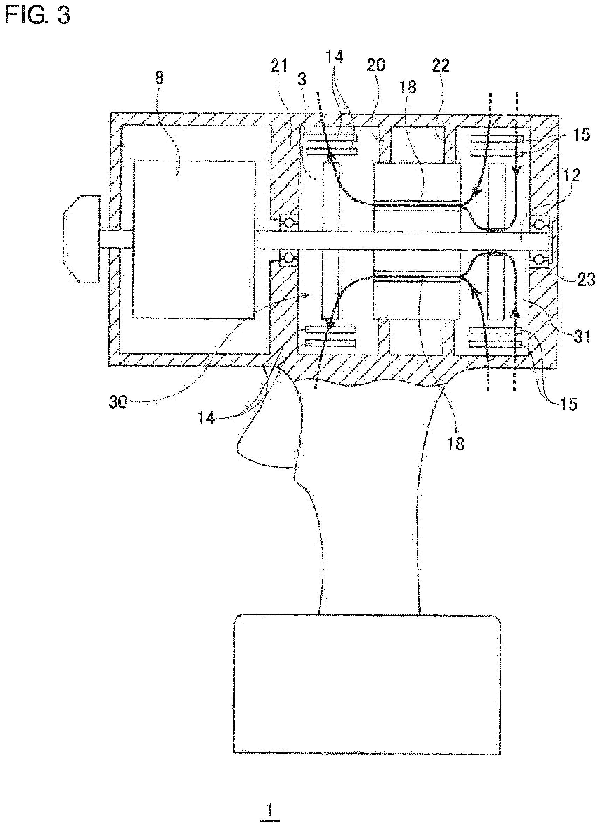

Fig. 3 shows the flow passage of air in the electric power tool 1. When the operator pulls the user operation switch 11, the shaft 12 is rotated and the cooling fan 3 provided in the first chamber 30 is also rotated. When the cooling fan 3 (centrifugal fan) is rotated, the air in the first chamber 30 is discharged from the first vent 14, and the air in the second chamber 31 is drawn into the first chamber 30 via the air gap 18. In the second chamber 31, the outside air is drawn in from the second vent 15 as the air is discharged from the air gap 18. Thus, by forming the first chamber 30 and the second chamber 31, the air drawn in from outside flows into the air gap 18 properly so as to cool the air gap 18 efficiently.

When the second retaining part 21 does not block the air flow in the longitudinal direction, for example, the cooling fan 3 draws air from a space in which the driving block 8 is provided as well as drawing air from the air gap 18, with the result that the air gap 18 cannot be cooled efficiently. In the case the first chamber 30 and the second chamber 31 communicate by way of a flow passage other than the air gap 18, more of the air will flow in the flow passage other than the air gap 18 because the air gap 18 is narrow and represents a large resistance to the air flow. As a result, the air gap 18 cannot be cooled efficiently. By forming the first retaining part 20, the second retaining part 21, and the third retaining part 22 so as to block the air flow in the longitudinal direction, efficient cooling of the air gap 18 is realized.

It is preferred to configure the first chamber 30 and the second chamber 31 to be a space as narrow as possible for the purpose of forming the air flow passage as indicated by the arrow of Fig. 3 properly. It is therefore preferred that the first retaining part 20 retains the outer circumference of the neighborhood of the front end of the motor 4, and the third retaining part 22 retains the outer circumference of the neighborhood of the back end of the motor 4.

Described above is an explanation based on an exemplary embodiment. The embodiment is intended to be illustrative only and it will be understood by those skilled in the art that various modifications to constituting elements and processes could be developed and that such modifications are also within the scope of the present disclosure.

In the embodiment, the cooling fan 3 is provided in the first chamber 30, but the cooling fan 3 may be provided in the second chamber 31. In the embodiment, the sensor substrate 5 is provided in the second chamber 31, but the sensor substrate 5 may be provided in the first chamber 30. Other than the sensor substrate 5, a circuit substrate carrying a switching element for driving the rotor 7 may be provided in the second chamber 31.

One embodiment of the present disclosure is summarized below.

In an electric power tool (1) according to an embodiment of the present disclosure, a built-in motor (4) that does not have a motor case is located in a housing (2). The electric power tool (1) includes: a first retaining part (20) provided on an inner circumferential surface of the housing (2) to retain an outer circumference of the motor (4) at or near one end of the motor (4); a second retaining part (21) that retains an outer circumference of a first bearing (13a) that supports a first motor shaft (12a) extending from the one end of the motor (4); a third retaining part (22) provided on the inner circumferential surface of the housing (2) to retain the outer circumference of the motor (4) at or near the other end of the motor (4); and a fourth retaining part (23) that retains an outer circumference of a second bearing (13b) that supports a second motor shaft (12b) extending from the other end of the motor (4).

A first chamber (30) bounded by the first retaining part (20), the second retaining part (21), and the housing (2) may include a first vent (14) communicating with a space outside the housing, a second chamber (31) bounded by the third retaining part (22), the fourth retaining part (23), and the housing (2) may include a second vent (15) communicating with a space outside the housing, and a cooling fan (3) coupled to the first motor shaft (12a) may be housed in the first chamber (30).

At least one of the second retaining part (21) and the fourth retaining part (23) may be provided on the inner circumferential surface of the housing (2). One of the second retaining part (21) and the fourth retaining part (23) may be provided on the inner circumferential surface of the housing, and the other of the second retaining part (21) and the fourth retaining part (23) may be formed at a back end of the housing (2).

### [REFERENCE SIGNS LIST]

1 ... electric power tool, 2 ... housing, 2a ... first housing member, 2b ... second housing member, 3 ... cooling fan, 4 ... motor, 6 ... stator, 7 ... rotor, 12 ... shaft, 12a ... first motor shaft, 12b ... second motor shaft, 13a ... first bearing, 13b ... second bearing, 14 ... first vent, 15 ... second vent, 18 ... air gap, 20 ... first retaining part, 21 ... second retaining part, 22 ... third retaining part, 22a ... first rib member, 22b ... second rib member, 23 ... fourth retaining part, 30 ... first chamber, 31 ... second chamber

### [INDUSTRIAL APPLICABILITY]

The present disclosure is applicable to the field of electric power tools.

## Claims

1. An electric power tool (1) in which a motor (4) located in a housing is a built-in motor that does not have a motor case, the electric power tool (1) comprising:
a first retaining part (20) provided on an inner circumferential surface of the housing (2) to retain an outer circumference of the motor at or near one end of the motor;
a second retaining part (21) provided on the inner circumferential surface of the housing (2) to retain an outer circumference of a first bearing (13a) that supports a first motor shaft (12a) extending from the one end of the motor;
a driving block (8) that includes a power transmission mechanism for transmitting a rotation of the first motor shaft (12a) to an output shaft (9);
a third retaining part (22) provided on the inner circumferential surface of the housing (2) to retain the outer circumference of motor at or near the other end of the motor; and
a fourth retaining part (23) formed at a back end of the housing (2) to retain an outer circumference of a second bearing (13b) that supports a second motor shaft (12b) extending from the other end of the motor, wherein
a first chamber (30) bounded by the first retaining part (20), the second retaining part (21), and the housing (2) forms
a space sealed in a longitudinal direction of the electric power tool (1) and includes a first vent (14) communicating with a space outside the housing (2),
a second chamber (31) bounded by the third retaining part (22), the fourth retaining part (23), and the housing (2) includes a second vent (15) communicating with a space outside the housing (2), and
a cooling fan (3) coupled to the first motor shaft (12a) is housed in the first chamber (30).

## Patentansprüche

1. Elektrowerkzeug (1), bei dem ein Motor (4), der sich in einer Ummantelung bzw. einem Gehäuse befindet, ein eingebauter Motor ist, der kein Motorgehäuse aufweist, wobei das Elektrowerkzeug (1) umfasst:
einen ersten Halteteil (20), der an einer Innenumfangsfläche bzw. -oberfläche des Gehäuses (2) bereitgestellt ist, um einen Außenumfang des Motors an oder nahe einem Ende des Motors zu halten;
einen zweiten Halteteil (21), der an der Innenumfangsfläche des Gehäuses (2) bereitgestellt ist, um einen Außenumfang eines ersten Lagers (13a) zu halten, das eine erste Motorwelle (12a) lagert bzw. trägt, die sich von dem einen Ende des Motors erstreckt;
einen Antriebsblock (8), der einen Leistungsübertragungsmechanismus zum Übertragen einer Drehung der ersten Motorwelle (12a) auf eine Abtriebswelle (9) enthält;
einen dritten Halteteil (22), der an der Innenumfangsfläche des Gehäuses (2) bereitgestellt ist, um den Außenumfang des Motors an oder nahe dem anderen Ende des Motors zu halten; und
einen vierten Halteteil (23), der an einem hinteren Ende des Gehäuses (2) ausgebildet ist, um einen Außenumfang eines zweiten Lagers (13b) zu halten, das eine zweite Motorwelle (12b) lagert bzw. trägt, die sich von dem anderen Ende des Motors erstreckt, wobei
eine erste Kammer (30), die durch den ersten Halteteil (20), den zweiten Halteteil (21) und das Gehäuse (2) begrenzt ist, einen Raum bildet, der in einer Längsrichtung des Elektrowerkzeugs (1) abgedichtet ist und eine erste Entlüftung (14) enthält, die mit einem Raum außerhalb des Gehäuses (2) kommuniziert bzw. in Verbindung ist,
eine zweite Kammer (31), die durch den dritten Halteteil (22), den vierten Halteteil (23) und das Gehäuse (2) begrenzt ist, eine zweite Entlüftung (15) enthält, die mit einem Raum außerhalb des Gehäuses (2) kommuniziert bzw. in Verbindung ist, und
ein Kühlgebläse (3), das mit der ersten Motorwelle (12a) gekoppelt ist, in der ersten Kammer (30) untergebracht ist.

## Revendications

1. Outil électrique (1) dans lequel un moteur (4) situé dans un logement est un moteur intégré qui n'a pas de carter de moteur, l'outil électrique (1) comprenant :
une première partie de retenue (20) prévue sur une surface circonférentielle interne du logement (2) pour retenir une circonférence externe du moteur à ou près d'une extrémité du moteur ;
une deuxième partie de retenue (21) prévue sur la surface circonférentielle interne du logement (2) pour retenir une circonférence externe d'un premier palier (13a) qui supporte un premier arbre de moteur (12a) s'étendant depuis l'extrémité en question du moteur ;
un bloc d'entraînement (8) qui inclut un mécanisme de transmission de puissance pour transmettre une rotation du premier arbre de moteur (12a) à un arbre de sortie (9) ;
une troisième partie de retenue (22) prévue sur la surface circonférentielle interne du logement (2) pour retenir la circonférence externe du moteur à ou près de l'autre extrémité du moteur ; et
une quatrième partie de retenue (23) formée à une extrémité arrière du logement (2) pour retenir une circonférence externe d'un second palier (13b) qui supporte un second arbre de moteur (12b) s'étendant depuis l'autre extrémité du moteur, dans lequel
une première chambre (30) bornée par la première partie de retenue (20), la deuxième partie de retenue (21) et le logement (2) forme un espace scellé dans une direction longitudinale de l'outil électrique (1) et inclut un premier évent (14) communiquant avec un espace à l'extérieur du logement (2),
une seconde chambre (31) bornée par la troisième partie de retenue (22), la quatrième partie de retenue (23) et le logement (2) inclut un second évent (15) communiquant avec un espace à l'extérieur du logement (2), et
un ventilateur (3) couplé au premier arbre de moteur (12a) est hébergé dans la première chambre (30).
